# EUROPEAN PATENT APPLICATION

(11) **EP 0 999 440 A1**
(43) Date of publication of application: **10.05.2000**
(21) Application number: 99122142.5
(22) Date of filing: 05.11.1999
(51) Int. Cl.: G01N 21/88

(54) **System and method for inspecting matter**

(30) Priority: 06.11.1998 JP 31626798
(71) Applicant: Toppan Printing Co., Ltd., Taito-ku Tokyo (JP)
(72) Inventor: Anzai, Takeshi, c/o Toppan Printing Co., Ltd., Tokyo (JP); Kaneda, Hidenori, c/o Toppan Printing Co., Ltd., Tokyo (JP); Kimura, Kazumasa, c/o Hitachi Koganei Denshi Ltd., Kodaira-city, Tokyo (JP)
(74) Representative: Leson, Thomas Johannes Alois, Dipl.-Ing.

(57) **Abstract**

The present invention is an inspection apparatus with which a reference image of a reference article captured by a camera is stored in a frame memory, an image of an inspected article is captured by the camera, the color of this image of the inspected article is converted to magenta, the color of the reference image read out from the frame memory is converted to green, the magenta image of the inspected article and the green reference image of the reference article are displayed superimposed on a monitor, the places that match up are displayed in a mixed color, and the places that are different are displayed in green for the reference image of the reference article and in magenta for the image of the inspected article, thereby allowing any differences between the reference article and the inspected article to be discerned. As a result, even very slight differences between a reference article and an inspected article can be discerned with ease.

## Description

### BACKGROUND OF THE INVENTION

### (1) Field of the Invention

This invention relates to an inspection apparatus that finds differences between a reference article and an article subject to inspection. More particularly, it relates to an inspection apparatus for reference and inspected articles used for quality control in the printing process for various types of packaging, pharmaceutical labeling, leaflets and pamphlets, and so forth.

### (2) Description of the Prior Art

In a photomechanical system, various materials, such as a film produced by the color and half-tone separation of an original color picture, a text original produced by computerized typesetter, a screen tint, and a shading mask film, are arranged on a transparent film for each color according to a specific layout, and this arranged film is photographed to produce a four-color original film. In the case of offset printing, this original film and a PS plate (presynthesized plate) produced by coating an aluminum plate with a sensitizing solution are placed one over the other in an exposure apparatus, and the PS plate is exposed to light, producing a machine plate for correction. An editor or designer takes proofs printed from this corrective machine plate, and corrects these proofs, which involves checking the plates for any errors.

Here, this original film must be inspected and revised before the production of the corrective machine plate or after correction of the proofs. For example, the original films of various colors must be checked to see if the various color-separated films are in register. Also, depending on the degree of accuracy required, the original films sometimes have to be made again, and the uncorrected original films are sometimes compared with the corrected original films. This is because in the revision work based on this correction, the wrong portion of the film may be revised, or the revision may accidentally extend to portions of the film not designated for correction.

In the past, a plate inspection apparatus was developed to test whether the register was correct, with which two original films of different colors were laid out next to one another, the two original films were photographed with two cameras respectively, the images of the original films for all colors were superimposed as images of distinct colors, and this product was displayed on a single display component. In the past, a plate inspection apparatus was also developed for checking the revision work based on the correction, with which the image of an uncorrected original film and the image of a corrected original film, both of which were of the same color, were superimposed after being changed into images of different colors, and displayed on a single display component. This made it possible to check on a screen whether the original films of various colors were in register and whether the correction result was correctly reflected in the original films after correction.

However, with the above-mentioned conventional plate inspection apparatus, if an attempt was made to read the images of two original films simultaneously for comparison, space was required for laying out the two original films next to one another, which resulted in increasing the size of plate inspection apparatus, and necessitating the use of two cameras, a costly requirement. Also, since this plate inspection apparatus was intended for inspecting flat articles such as original films or paper, the focal point of the cameras was fixed, so this system was not suited to the inspection of three-dimensional articles.

### SUMMARY OF THE INVENTION

In view of this, the present invention: provides a compact and inexpensive inspection apparatus with which the differences between a reference article and an inspected article can be identified.

Further, the present invention provides an inspection apparatus with which the differences between a reference article and an inspected article can be identified with ease.

Still further, the present invention provides an inspection apparatus with which the reference article and inspected article are not limited to flat articles or the original film. For example, three-dimensional articles can also be inspected.

The present invention is an inspection apparatus for finding differences between a reference article and an inspected article, comprising a camera for capturing images of the reference article and inspected article, an (analog/digital) A/D converter for digitizing the image to be output from the reference article captured by the camera, a memory for storing this digitized reference image of the reference article, a difference accentuation circuit for superimposing the reference image of the reference article stored in this memory with an image of an inspected article captured by the camera, a (digital/analog) D/A converter for converting the output information obtained from this difference accentuation circuit into an analog signal, and a monitor device into which this analog signal is input, wherein any differences between the reference article and the inspected article, can be easily identified, and the inspection can be easily completed.

### BRIEF DESCRIPTION OF THE DRAWINGS

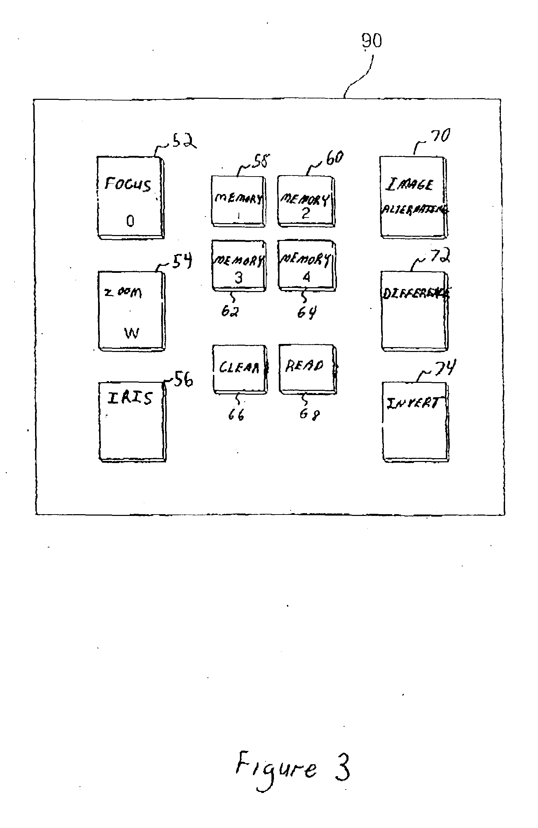

Figure 1 is a schematic diagram of the inspection apparatus of the present invention;
Figure 2 is a block diagram of the processing circuit in the inspection apparatus of the present invention; which shows:
   14 monochrome camera (with zoom lens, focusing function, and iris adjusting function)
   28 frame memory
   30 color conversion circuit (green)
   26 color conversion circuit (magenta)
   32 negative/positive inversion circuit
   38 comparison circuit
   40 difference accentuation circuit
   48 monitor
   50 video printer
Figure 3 is a diagram illustrating an example of the key switch panel of the inspection apparatus of the present invention which shows: 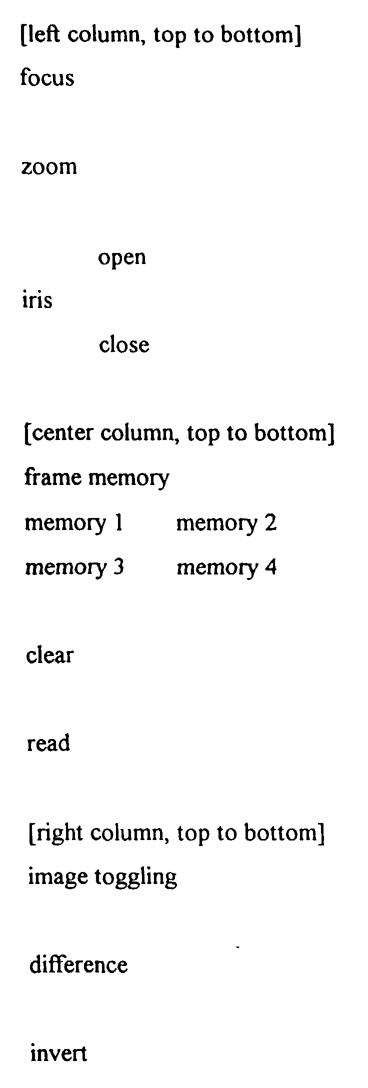

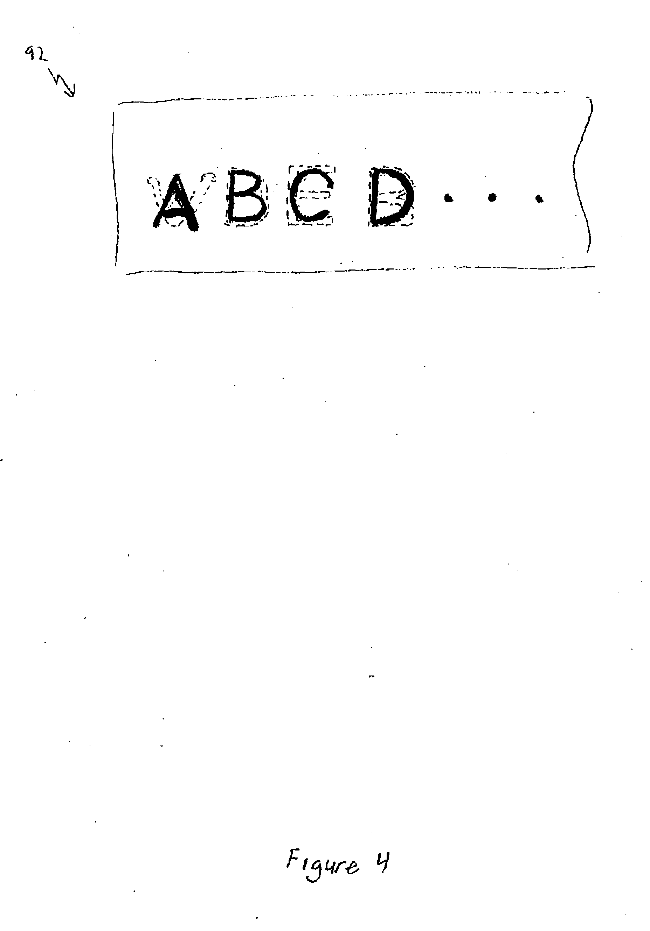

Figure 4 is a diagram illustrating an example in which the reference image of the reference article of the present invention is superimposed with an image of the inspected article.

### DETAILED DESCRIPTION OF THE INVENTION

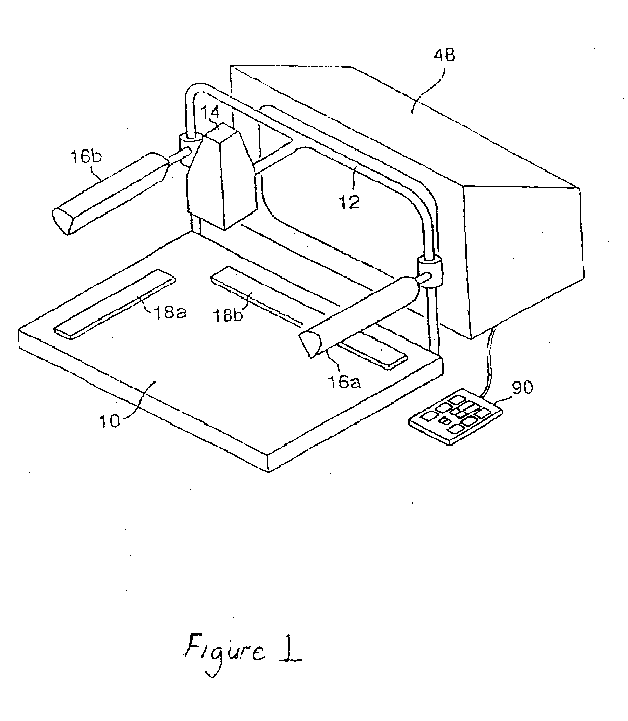

Figure 1 is a simplified diagram of the inspection apparatus of the present invention. A frame 12 for supporting a light source and a camera is erected at the rear of an original holder 10 on which the reference article or inspected article is placed. Jigs 18a and 18b are provided on original holder 10 for the purpose of lining up the reference article or inspected article for inspection. A camera 14 is provided at the top of the frame 12, and light sources 16a and 16b are attached to the left and right posts of the frame 12 so that the light sources can move up and down and rotate. The camera 14 is equipped with a zoom lens, a focus adjustment function for adjusting the focus of the lens, and an iris adjustment function for adjusting the white balance. The light sources used here may be xenon lamps, halogen lamps or the like, or a fluorescent lamp may be used for (direct/current) DC lighting or high-frequency lighting. The camera can be a charge coupled device (CCD) type or a metal-oxide semiconductor (MOS) type. The surface of the original holder 10 serves as a reflection board, and allows an image to be captured even for a film or other such transmissive inspected article. A processing circuit for identifying differences between the reference article and the inspected article is housed within the original holder 10. A monitor 48 for displaying the images captured by the camera is provided to the rear of the original holder 10, and a key switch panel 90 for inputting commands is connected to the original holder 10.

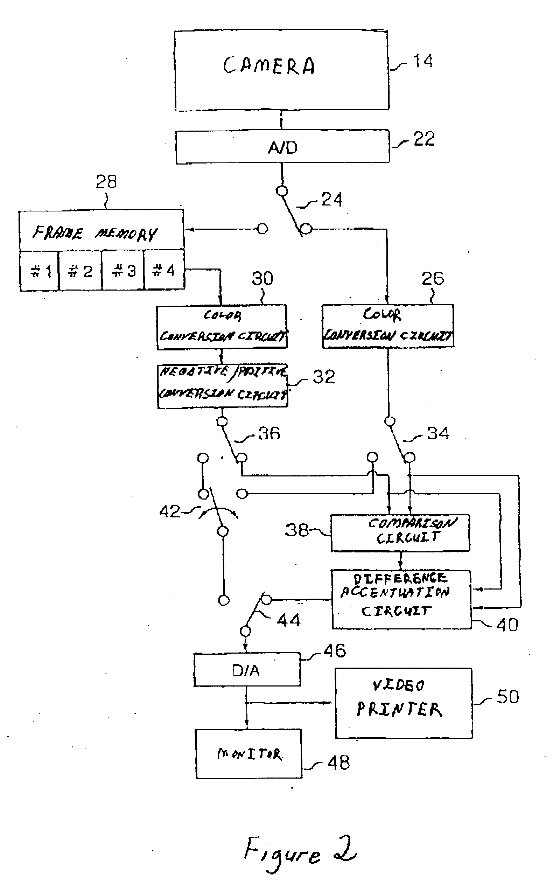

Figure 2 is a block diagram of the processing circuit for identifying differences between the reference article and the inspected article, which is housed in the original holder 10. First, an image captured by the camera 14 is input to an A/D converter 22 and digitized. The output of the A/D converter 22 is supplied via a switch 24 to either a color conversion circuit 26 or a frame memory 28. The color conversion circuit 26 converts the color of the image output from the camera 14 to magenta. The magenta-colored image output from the color conversion circuit 26 is supplied to the input terminal of a switch 34.

The frame memory 28 has enough storage capacity for four frames of memory. The frame memory 28 supplies image of one frame of memory to a color conversion circuit 30. The color conversion circuit 30 converts the color of the reference image output from the frame memory 28 to green. The green-colored reference image output from the color conversion circuit 30 is supplied to a negative/positive conversion circuit 32, and this reference image is negatively or positively inverted as needed. The green-colored reference image output from the negative/positive conversion circuit 32 is supplied to the input terminal of a switch 36.

The first terminals of the switches 34 and 36 are connected to a comparison circuit 38 and a difference accentuation circuit 40. The comparison circuit 38 compares the magenta image from the camera 14 supplied via the switch 34, to the green reference image from the frame memory 28 supplied via the switch 36, and the comparison result is supplied to the difference accentuation circuit 40. The difference accentuation circuit 40 combines the magenta inspection image output from the camera 14 via the switch 34 with the green reference image output from the frame memory 28 via the switch 36, so that any differences therebetween can be identified. Therefore, because the magenta inspection image and the green reference image are combined, the places where they coincide are displayed in black, which is a mixture of these two colors, and the places where they are different are displayed as magenta and green, respectively. The difference accentuation circuit 40 lowers the brightness at the coinciding places on the basis of the comparison result output by the comparison circuit 38. The lowering of the brightness at the coinciding places results in the coinciding places being displayed in a light gray color, and accentuates the places where the images are different. The output of the difference accentuation circuit 40 is supplied to the first input terminal of a switch 44.

The second terminals of the switches 34 and 36 are connected to the first and second input terminals of a switch 42, respectively. The first and second input terminals of the switch 42 are switched in a specific timing (such as about once a second). Accordingly, the magenta image output from the camera 14 is displayed alternately with the green reference image output from the frame memory 28. The output of the switch 42 is supplied to the second input terminal of a switch 44. The output of the switch 44 is converted into an analog signal by a D/C convener 46, and supplied to either the monitor 48 or a video printer 50.

The switch 24 is connected to the second input terminal on the frame memory 28 side only when the output of the camera 14 is taken in by the frame memory 28, and at all other times is connected to the first input terminal on the magenta color conversion circuit 26 side. The switches 34, 36, and 44 are switched in unison, and during alternating inspection (discussed below), the switch 34 is connected to the first input terminal on the switch 42 side, the switch 36 is connected to the second input terminal on the switch 42 side, and the switch 44 is connected to the second input terminal. The switch 42 should only operate during alternating inspection, in which the reference image of the reference article and the image of the inspected article are displayed alternately, and when it does operate, it is connected alternately to the first and second terminals in a specific timing.

Figure 3 shows a key switch panel 90 that is used to input various commands. A focus switch 52, a zoom switch 54, and an iris switch 56 are seesaw switches that have middle positions, and can be pressed up and down. Whiteness increases when the iris is opened, and the magenta color becomes more intense when the iris is closed. The frame memory switches consist of four switches including a frame memory1 58, a frame memory2 60, a frame memory3 62 and a frame memory4 64, and are used to designate the frame memory to be stored or reproduced. A clear switch 66 is used to clear the content of the designated frame memory. A read switch 68 is used to store the image currently displayed on the monitor 48 in the designated frame memory. An image-alternating switch 70 is used to perform an alternating inspection in which the reference image of the reference article is displayed alternately with the image of the inspected article. A difference switch 72 is used to accentuate places where the two images (magenta and green) are different by lowering the brightness of the places where they coincide in the combined display of the images. An invert switch 74 is used to invert to negative or positive the reference image output from the frame memory 28. For example, when the reference article is negative and the inspected article is positive, the output of the reference image can be converted from negative to positive by pressing the invert switch 74 after the reference image has been stored in the frame memory 28.

When all of the switches are off, the image captured by the camera 14 is displayed on the monitor 48 in magenta color.

In the following description, to facilitate an understanding of the present invention, the discussion of the reference article and inspected article being compared will be provided for a case in which an uncorrected proof, which is a preliminary printing made for the purpose of correction, and a PS plate, which is the final printing produced on the basis of the corrected results, are compared for inspection. One of ordinary skill in the art will understand that the present invention is not limited to the field of printing, and can be used for the comparison and inspection of any two articles.

An uncorrected proof is lined up with jigs 18a and 18b and placed on the original holder 10. A magenta image of the proof printing is displayed on the monitor 48. The operator refers to the image displayed on the monitor 48 while adjusting the iris so that the white background is correctly displayed as white. This iris adjustment function allows a distinct image to be captured even with microfilm, slide film or other such diazo films with which a distinct image could not be displayed on the monitor 48 otherwise. The zoom function is used to capture only the portion of the image required for inspection, and the focus is adjusted using the focusing function.

While the desired image is displayed on the monitor, the operator uses the frame memory switches to designate one of the frame memories 1 to 4, and the read switch is actuated. This results in an image of the proof being taken into the frame memory 28 as a reference image.

The proof is then removed from the original holder 10, and it is replaced with a PS plate that has been revised on the basis of the correction results. Here, the PS plate is lined up with the jigs 18a and 18b so that it is disposed in the same position as the proof before it. Accordingly, positioning can be accomplished with ease. A magenta-colored image of the PS plate is displayed on the monitor 48. Just as with the proof, the operator refers to the image displayed on the monitor 48 while adjusting the iris so that the white background is white. The zoom function is used so that only the portion required for inspection will be captured, and the focus function is used to adjust the focus.

The frame memory storing the reference image of the proof is selected from among the four frame memories 1 to 4 at this point. The reference image of the proof is thereupon read out from the selected frame memory 28 and displayed as a green image on the monitor 48, while the magenta-colored image of the PS plate from the camera 14 is displayed on the monitor 48 such that it is superimposed over the green reference image of the proof. If the two images are not positionally aligned, the PS plate is shifted on the original holder 10 until it is aligned. If the sizes of the two images are not the same, the zoom function is used to adjust the display magnification of the PS plate. Since the camera 14 is provided with a zoom function for enlarging or reducing the image, there is no problem if the sizes of the reference article and the inspected article are different. For instance, if a printing company sends a facsimile of a proof to a customer, and the customer then corrects the proof it received by facsimile and returns it to the printing company again by facsimile, there may be a slight change in the size during sending and receiving. In this case, the size of the two images can be made the same by means of the above-mentioned zoom function.

When a negative film is compared to a positive film for inspection, the negative film is stored in the frame memory 28, the positive film is photographed with the camera 14, and a reference image of the negative film is read out from the frame memory 28, after which the invert switch 74 is pressed on so as to convert the reference image of the negative film into a positive reference image, allowing it to be the same as the image of the positive film. The invert switch 74 for inverting to negative or to positive can be used to perform an inspection even when the reference article and inspected article have inverse degrees of color brightness, such as with a negative film and positive film.

Since the magenta-colored image of the PS plate captured by the camera 14 is combined by the difference accentuation circuit 40 with the green reference image of the proof read out from the frame memory 28 and displayed on the monitor 48, the places where the two images coincide become black, which is a mixture of these colors, while the places where the images are different are displayed as magenta and green, respectively. Furthermore, since the difference accentuation circuit 40 lowers the brightness of the places where the images coincide on the basis of the comparison results detected by the comparison circuit 38, those places where the images coincide are displayed in a light gray color, and as a result the places where the images are different are accentuated, allowing the operator to ascertain whether the revisions were carried out correctly or not.

Figure 4 illustrates a case 92 when "ABCD," which is part of the green reference image, is displayed in combination with "VDEB," which is part of the magenta image of the corresponding inspection article.

When the image alternating switch 70 is turned on here, the conversion switches 34, 36, and 44 are switched, and the switch 44 is switched at a specific timing. Accordingly, the magenta-colored image of the PS plate captured by the camera 14 and the green reference image of the proof read out from the frame memory 28 are alternately displayed on the monitor 48.

Because four frames of memory can be stored in the frame memory 28, when a large-sized piece of printed matter is inspected, the unrevised image can be split up and stored in the frame memory 28, and the revised image can similarly be split up and photographed, with the comparison being performed in portions. The use of these four frame memories allows even large-sized printed materials to be inspected. Also, in addition to display on the monitor 48, color printing with the video printer 50 allows a record of the execution of revisions to be kept, which facilitates the checking of the corrected results.

Therefore, by furnishing an inspection apparatus with a camera for capturing images of a reference article and inspected article, a memory for storing a reference image of the reference article, and a monitor device for displaying a combination of the reference image of the reference article stored in the memory and the image of the inspection article captured by the camera 14 so that any differences between the two sets of image information can be identified, it is possible to provide an inspection apparatus that is compact and inexpensive and yet allows differences in two images to be identified on a monitor, and that can be used for a wide range of comparison inspections of two articles, and not just for original films, paper, or other such flat articles.

The above description was of the inspection of a proof and a PS plate in order to simplify the details of the present invention, but the inspected article is not limited to corrected and uncorrected printed matter. Instead of a proof and a PS plate, if two plates of different colors are similarly inspected, it is possible to confirm whether original films of various colors are in register. Furthermore, the present invention can be applied to the comparison of two articles outside of the field of printing. For instance, it can be used to check for forgeries of paper currency, bonds, and the like. An image of authentic paper currency is stored in the frame memory 28, an image of the bill being inspected is captured with the camera 14, and the two images are displayed in combination, which allows a counterfeit bill to be detected by finding any places that are different. Also, the inspected article is not limited to flat articles, and may instead be a box, a container, or another such three-dimensional object. Specifically, the present invention can be applied not only for checking articles before and after correction, but also for the inspection of articles that must be the same from the outset, and is therefore useful in quality control, manufacturing management, and numerous other applications.

The present invention is an inspection apparatus with which a reference image of a reference article captured by a camera is stored in a frame memory, an image of an inspected article is captured by the camera, the color of this image of the inspected article is converted to magenta, the color of the reference image read out from the frame memory is converted to green, the magenta image of the inspected article and the green reference image of the reference article are displayed superimposed on a monitor, the places that match up are displayed in a mixed color, and the places that are different are displayed in green for the reference image of the reference article and in magenta for the image of the inspected article, thereby allowing any differences between the reference article and the inspected article to be discerned. As a result, even very slight differences between a reference article and an inspected article can be discerned with ease.

## Claims

1. An inspection apparatus, comprising:
a camera for capturing monochrome images of an inspected article;
a memory for storing the images that serve as references for inspection; and
a monitor device for displaying the reference images stored in said memory and images of the inspected articles captured by said camera, and displaying said images such that the differences between the two can be discerned.

2. An inspection apparatus as defined in Claim 1, said inspection apparatus characterized in that said reference images are images obtained by using said camera to take pictures of reference articles that serve as a reference for inspection.

3. An inspection apparatus as defined in Claim 1 or 2, said inspection apparatus characterized in that said monitor device displays said reference images in a different color from that of said images of inspected articles.

4. An inspection apparatus as defined in Claim 3, said inspection apparatus characterized in that said monitor device displays said reference images superimposed with said images of inspected articles on the same screen, with coinciding points being displayed in a mixture of the colors thereof, and differences being displayed in the respective independent colors.

5. An inspection apparatus as defined in Claim 4, said inspection apparatus characterized in that said monitor device displays the coinciding points of said reference images and said images of inspected articles in low brightness, and displays differences in high brightness.

6. An inspection apparatus as defined in Claim 3, said inspection apparatus characterized in that said monitor device displays said reference images and said images of inspected articles alternately on the same screen.

7. An inspection apparatus as defined in any of Claims 3 to 6, said inspection apparatus characterized in that said monitor device allows the selection of the color of said reference images and the color of said images of inspected articles.

8. An inspection apparatus as defined in any of Claims 1 to 7, said inspection apparatus characterized in that said monitor device displays monochrome images of said inspected articles in real time with the capturing of these images.

9. An inspection apparatus as defined in any of Claims 1 to 8, said inspection apparatus characterized in that said monitor device displays either said reference images or said images of inspected articles inverted as a negative or positive.

10. An inspection apparatus as defined in any of Claims 1 to 9, said inspection apparatus characterized in that said camera has an iris adjusting function for adjusting the background colors of the reference images and the images of inspected articles.
